(19) Europäisches Patentamt / European Patent Office / Office européen des brevets

(11) **EP 2 718 761 B1**

(12) **EUROPEAN PATENT SPECIFICATION**

(45) Date of publication and mention
of the grant of the patent:
**30.03.2022  Bulletin 2022/13**

(21) Application number: **12796490.6**

(22) Date of filing: **07.06.2012**

(51) International Patent Classification (IPC):
**G02B 9/62** *(2006.01)*          **G02B 11/32** *(2006.01)*
**G02B 13/00** *(2006.01)*          **G02B 5/20** *(2006.01)*

(52) Cooperative Patent Classification (CPC):
**G02B 9/62; G02B 5/208; G02B 13/0045**

(86) International application number:
**PCT/KR2012/004461**

(87) International publication number:
**WO 2012/169778 (13.12.2012 Gazette 2012/50)**

(54) **IMAGING LENS AND CAMERA MODULE**

ABBILDUNGSLINSE UND KAMERAMODUL

LENTILLES D'IMAGERIE ET MODULE DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.06.2011  KR 20110054477**

(43) Date of publication of application:
**16.04.2014  Bulletin 2014/16**

(73) Proprietor: **LG Innotek Co., Ltd.**
**Seoul, 04637 (KR)**

(72) Inventor: **JEONG, Hyejung**
**Seoul 100-714 (KR)**

(74) Representative: **DREISS Patentanwälte PartG
mbB
Friedrichstraße 6
70174 Stuttgart (DE)**

(56) References cited:
**EP-A1- 2 120 451          JP-A- H10 123 418
JP-A- 2006 033 138          JP-A- 2006 053 361
KR-A- 20070 103 553          KR-A- 20070 103 553
KR-A- 20100 040 357          KR-A- 20100 040 357
KR-A- 20100 136 832          US-A1- 2010 044 814
US-A1- 2010 253 829**

**Description**

[Technical Field]

The teachings in accordance with exemplary embodiments of this invention relate generally to an imaging lens and a camera module.

[Background Art]

Recently, vigorous research efforts are being made in the field of a mobile phone-purpose camera module, a digital still camera (DSC), a camcorder, and a PC camera (an imaging device attached to a person computer) all connected with an image pick-up system. One of the most important components in order that a camera module related to such an image pickup system obtains an image is an imaging lens producing an image.

Previously, there have been attempts to construct an imaging lens of high-resolution by using 5 pieces of lenses. Each of 5 pieces of lenses is comprised of lenses with a positive (+) refractive power and lenses with a negative (-) refractive power. For example, an imaging lens is constructed on a structure of PNNPN (+---+-), PNPNN (+-+--) or PPNPN (++-+-) in order starting from an object side. However, an imaging module of such a framework fails to show approving optic characteristics or aberration characteristics. Accordingly, a high-resolution imaging lens of a new power structure is required. A six element lens having a structure of PNPPNN (+-++--) is described in KR 2010 0040357 A.

[Disclosure]

[Technical problem]

Accordingly, embodiments of the present invention may relate to an imaging lens and a camera module that substantially obviates one or more of the above disadvantages/problems due to limitations and disadvantages of related art, and it is an object of the present invention to provide an imaging lens and a camera module configured to prevent a stain on a photographed image.

Technical problems to be solved by the present invention are not restricted to the above-mentioned, and any other technical problems not mentioned so far will be clearly appreciated from the following description by skilled in the art.

[Technical Solution]

The invention is defined in the appended set of claims.

In one general aspect of the present invention, there is provided an imaging lens, the imaging lens comprising in an ordered way from an object side: a first lens having positive (+) refractive power; a second lens having negative (-) refractive power; a third lens having positive (+) refractive power; a fourth lens having positive (+) refractive power; a fifth lens having negative (-) refractive power; and a sixth lens having negative (-) refractive power, wherein the sixth lens is formed with an infrared filter coated film.

Preferably, but not necessarily, one surface of the sixth lens is formed with a lens forming unit. According to the invention the other surface of the sixth lens is formed with the infrared filter coated film.

Preferably, but not necessarily, the other surface of the sixth lens is a plane surface.

In another general aspect of the present invention, there is provided a camera module, the camera module comprising: an imaging lens including a plurality of lenses; and an image sensor positioned at a bottom surface of the imaging lens to convert an optical image to an electrical signal, wherein an infrared filter coated film is formed on a lens adjacent to the image sensor among the plurality of lenses.

Preferably, but not necessarily, the camera module is further comprising: a lens barrel mounted with the plurality of lenses; a bobbin coupled to the lens barrel; and an actuator including a coil wound on a peripheral surface of the bobbin.

Preferably, but not necessarily, the infrared filter coated film is distanced from the image sensor at a predetermined space.

Preferably, but not necessarily, the infrared filter coated film is mounted on the lens barrel to move along with the plurality of lenses when an auto focusing operation is performed.

Preferably, but not necessarily, a lens adjacent to the image sensor is formed at one surface with a lens forming unit. According to the invention the other surface of the lens is formed with the infrared filter coated film.

Preferably, but not necessarily, the other surface of the lens adjacent to the image sensor is a plane surface.

Preferably, but not necessarily, the infrared filter coated film is brought into contact with the image sensor.

The plurality of lenses includes in an ordered way from an object side a first lens having positive (+) refractive power; a second lens having negative (-) refractive power; a third lens having positive (+) refractive power; a fourth lens having positive (+) refractive power; a fifth lens having negative (-) refractive power; and a sixth lens having negative (-) refractive power.

**Advantageous Effects of Invention**

The imaging lens and camera module according to the present invention have advantageous effects in that the a camera module lens is dispensed with an assembly process of adhering a separate infrared filter to a camera part using adhesive means, and generation of foreign object from the adhesive means is fundamentally interrupted during operation of the camera module, whereby generation of stain on an image photographed by the camera module is prevented.

**Brief Description of Drawings**

FIG. 1 is a constructional view illustrating an imaging lens of a camera module according to a first exemplary embodiment of the present invention.
FIG. 2 is a conceptual view illustrating a camera module according to a first exemplary embodiment of the present invention.
FIG. 3 is a conceptual view illustrating a relationship between an infrared filter coated film of a camera module and an image sensor according to a first exemplary embodiment of the present invention.
FIG. 4 is a graph illustrating coma aberration according to a first exemplary embodiment of the present invention.
FIG. 5 is a graph illustrating spherical aberration according to a first exemplary embodiment of the present invention.
FIG. 6 is a constructional view illustrating a camera lens module according to a second exemplary embodiment of the present invention.
FIG. 7 is a graph that has measured coma aberration according to a second exemplary embodiment of the present invention.
FIG. 8 is a graph that has measured longitudinal spherical aberration, astigmatic field curves and distortion according to a second exemplary embodiment of the present invention.

**Best Mode for Carrying out the Invention**

The following description is not intended to limit the invention to the form disclosed herein. Consequently, variations and modifications commensurate with the following teachings, and skill and knowledge of the relevant art are within the scope of the present invention. The embodiments described herein are further intended to explain modes known of practicing the invention and to enable others skilled in the art to utilize the invention in such, or other embodiments .

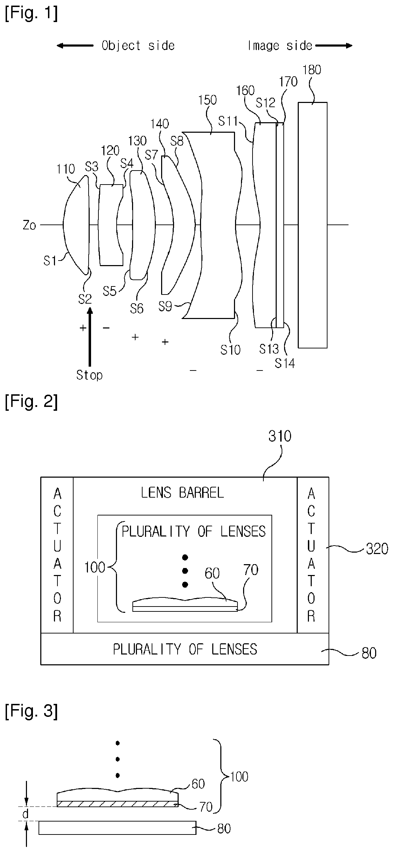

The disclosed embodiments and advantages thereof are best understood by referring to FIGS. 1-8 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope of the appended set of claims.

It will be understood that the terms "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. That is, the terms "including", "includes", "having", "has", "with", or variants thereof are used in the detailed description and/or the claims to denote non-exhaustive inclusion in a manner similar to the term "comprising".

Furthermore, "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated. That is, in the drawings, the size and relative sizes of layers, regions and/or other elements may be exaggerated or reduced for clarity. Like numbers refer to like elements throughout and explanations that duplicate one another will be omitted. Now, the present invention will be described in detail with reference to the accompanying drawings.

Words such as "thus," "then," "next," therefore , etc. are not intended to limit the order of the processes; these words are simply used to guide the reader through the description of the methods.

It will be understood that when an element is referred to as being "connected" or "coupled" to another element, it can be directly connected or coupled to the other elements or intervening elements may be present. In contrast, when an element is referred to as being "directly connected" or "directly coupled" to another element, there are no intervening elements present.

It will be understood that, although the terms first, second, etc. may be used herein to describe various elements, these elements should not be limited by these terms. These terms are only used to distinguish one element from another. For example, a first region/layer could be termed a second region/layer, and, similarly, a second region/ layer could be termed a first region/layer without departing from the teachings of the disclosure.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise.

Now, the imaging lens and camera module according to exemplary embodiments of the present invention will be described in detail with reference to the accompanying drawings.

FIG. 1 is a constructional view illustrating an imaging lens of a camera module according to a first exemplary embodiment of the present invention.

The camera module according to a first exemplary embodiment of the present invention includes an image lens including a plurality of lenses comprised of first to sixth lenses (110, 120, 130, 140, 150, 160) and an image sensor (180) formed at a bottom surface of the imaging lens to convert an optical image to an electrical signal, wherein the sixth lens (160) adjacent to the image sensor (180) among the plurality of lenses (110, 120, 130, 140, 150, 160) is formed with an infrared filter coated film (170).

At this time, one surface of the sixth lens (160) is formed with a lens forming unit, and the other surface of the sixth lens (160) is formed with the infrared filter coated film (170). Preferably, the other surface of the sixth lens (160) is a plane surface to allow the infrared filter coated film (170) to be evenly formed.

The imaging lens comprised of the first to sixth lenses (110, 120, 130, 140, 150, 160) is arranged about an optical axis (ZO), a thickness, size, and shape of a lens are rather overdrawn for description, and a spherical shape or an aspheric shape has been only presented as one embodiment, but obviously not limited to this shape.

FIG. 1 is a constructional view illustrating a camera lens module and an imaging lens according to a first exemplary embodiment of the present invention. Referring to FIG.1, the imaging lens of the present invention has a layout construction with a first lens (110), a second lens (120), a third lens (130), a fourth lens (140), a fifth lens (150), a sixth lens (160), an infrared filter coated film (170) and an image sensor (180) in an ordered way from an object side.

Light corresponding to image information of a subject passes the first lens (110), the second lens (120), the third lens (130), the fourth lens (140), the fifth lens (150), the sixth lens (160), and the infrared filter coated film (170), and is incident on the image sensor (180). The first lens (110), the second lens (120), the third lens (130), the fourth lens (140), the fifth lens (150), the sixth lens (160) are the imaging lens of the present invention, and the present invention is formed with a separate aperture interposed between the first lens (110) and the second lens (120). The infrared filter coated film (170) is coated on the sixth lens (160).

Thus, the camera lens module of the present invention is advantageous in that the sixth lens (160) is coated with the infrared filter coated film (170) to dispense with a separate infrared filter. Furthermore, a conventional camera module requires a separate infrared filter, such that the infrared filter must be mounted on such parts as a case, a housing, a base and a rib. At this time, adhesive means is applied to mount the infrared filter, where the adhesive means may be destroyed to generate foreign objects when the camera module is operated. These foreign objects are floated inside the camera module to generate stains on photographed images and act as pollution sources.

The camera lens module according to the present invention has an advantageous effect in that it needs no assembly process of attaching a separate infrared filter to camera parts using adhesive means, whereby generation of pollution sources by the adhesive means during operation of the camera module can be thoroughly blocked and generation of stains on the photographed image in the camera module can be prevented.

Hereinafter, in the description of the construction of each lens, "object side surface" means the surface of a lens facing an object side with respect to an optical axis, "image side surface" means the surface of the lens facing an imaging surface with respect to the optical axis, and upper side surface means the surface of the lens a capturing surface with respect to an optical axis.

In the specification, "imaging" basically may refer to the process in which an imaging lens receives light from a subject in the field and outputs an image (image signal and image data) indicating the same. However, if the imaging lens is repeatedly generating the image indicating the subject in the field at a predetermined cycle, "imaging" may mean the process of storing a specific image out of the images generated by the imaging lens in a storage unit. In other words, from a certain standpoint, "imaging" may mean a process in which the imaging lens acquires an image indicating the content of the subject in the field and having the same in a state subjectable to the measurement process at a certain intended timing.

The first lens (110) has positive (+) refractive power, wherein an object side surface (S1) is convexly formed. The second lens has negative (-) refractive power, wherein an upper side surface (S4) is concavely formed. A separate aperture is interposed between the first and second lenses (110, 120).

The third lens (130) has positive (+) refractive power, the fourth lens (140) also has positive (+) refractive power, the fifth lens (150) has negative (-) refractive power, and the sixth lens (160) has negative (-) refractive power.

Referring to FIG.1 again, the third lens (130) takes a meniscus form convexly formed at an upper side surface (S6), the fourth lens (140) takes a meniscus form convexly formed at an upper side surface (S8), the fifth lens (150) takes a meniscus form convexly formed at an object side surface (S9), and the sixth lens (160) takes a meniscus form at an upper side surface (S12).

For reference, 'S1' in FIG.1 is an object side surface of the first lens (110), 'S2' is an upper side surface of the first lens (110), 'S3' is an object side surface of the second lens (120), 'S4' is an upper side surface of second lens (120), 'S5' is an upper side surface of the third lens (130), 'S7' is an object side surface of the fourth lens (140), 'S10' is an upper side surface of the fifth lens (150), 'S11' is an upper side surface of the sixth lens (160), and 'S13' and 'S14' are object side surface and an upper side surface of the infrared filter coated film (170) respectively.

Furthermore, one or more lenses of the first to sixth lenses (110, 120, 130, 140, 150, 160) may be formed with aspheric shape. The infrared filter coated film (170) blocks radiant heat emitting from external light from being transferred to the image sensor (180). Furthermore, the infrared filter coated film (170) transmits visible light and reflects infrared rays to output it to the outside.

The image sensor (180) is an image sensor, for example, CCD (Charge Coupled Device) or CMOS (Complementary Metal Oxide Semiconductor), etc.

The first lens (110), the second lens (120), the third lens (130), the fourth lens (140), the fifth lens (150) and the sixth lens (160) use an aspheric lens as later- described in the exemplary embodiments, to possibly improve resolution of a lens and have a good point of superior aberration property.

Because the later-described conditional expressions and exemplary embodiments are preferred embodiments enhancing an effect of interaction, it would be obvious to those skilled in the art that the present invention is not necessarily comprised of the following conditions. For example, only by satisfying some conditions of later-described conditional expressions, the lens construction (framework) of the present invention may have an enhanced effect of interaction.

$$[\text{Conditional expression 1}]\ 0.5 < f1/f < 1.5$$

$$[\text{Conditional expression 2}]\ 0.5 < \sum T/f < 1.5$$

$$[\text{Conditional expression 3}]\ 1.6 < N2 < 1.7$$

$$[\text{Conditional expression 4}]\ 20 < V2 < 30$$

$$[\text{Conditional expression 5}]\ 50 < V3, V4, V5 < 60$$

where, f: an entire focus distance of the imaging lens

f1: a focus distance of the first lens

$\sum T$: a distance from object side surface of the first lens to an image-forming surface

N2: refractive index of second lens

V2, V3, V4, V5: Abbe's numbers of the first to fifth lenses

Conditional expression 1 specifies refractive power of the first lens (110), The first lens (110) has refractive power having an appropriate compensation of spherical aberration and appropriate chromatic aberration according to the conditional expression 1. The conditional expression 2 specifies dimension of optical axis direction of the entire optical system, and it is a condition for ultra-small lens and a condition for appropriate aberration compensation.

Conditional expression 3 specifies refractive index of the second lens, conditional expression 4 specifies Abbe's number of second lens, and conditional expression 5 specifies Abbe's numbers of third, fourth and fifth lenses. The specification of Abbe's number of each lens is a condition for better compensation of chromatic aberration.

Hereinafter, the action and effect of the present invention will be described with reference to a specific exemplary embodiment. Aspheric mentioned in a later-exemplary embodiment is obtained from a known Equation 1, and 'E and its succeeding number' used in Conic constant k and aspheric coefficient A, B, C, D, E, F indicates 10's power. For example, E+01 denotes 10.sup.1, and E-02 denotes 10.sup.-2.

<Equation 1>

$$Z = \frac{cY^2}{1+\sqrt{1-(1+K)c^2Y^2}} + AY^4 + BY^4 + CY^4 + DY^4 + EY^4 + FY^4 + \dots$$

where, z: distance from the lens's top-point to an optical axis direction,
c: basic curvature of a lens , Y: distance towards a direction perpendicular to an optical axis, K: conic constant, and A, B, C, D, E, F: aspheric coefficients

[EXEMPLARY EMBODIMENTS]

The following Table 1 shows an exemplary embodiment matching the aforementioned conditional expressions.

Table 1

[Table 1]

|  | Exemplary embodiments |
|---|---|
| f | 4.17 |
| f1 | 2.57 |
| f2 | -3.06 |
| f3 | 6.91 |
| f4 | 10.96 |
| f5 | -6.45 |
| f6 | -48.45 |
| \| f2/f1 \| | 1.19 |
| ΣT | 4.9 |
| ΣT/f | 1.175 |

Referring to Table 1, f1/f is 0.61 that matches the conditional expression 1, and ΣT/f is 1.175 that matches the conditional expression 2.
The following Table 2 shows an exemplary embodiment which is a more detailed exemplary embodiment over that of Table 1.

Table 2

[Table 2]

| Surface number | Curvature radius (R) | Thickness or distance (d) | Refractive index (N) | Material |
|---|---|---|---|---|
| 1* | 1.50 | 0.55 | 1.54 | Plastic |
| 2* | -19.20 | 0.10 |  |  |
| (stop) | 0.00 | 0.10 |  |  |
| 4* | 5.90 | 0.39 | 1.64 | Plastic |

(continued)

| Surface number | Curvature radius (R) | Thickness or distance (d) | Refractive index (N) | Material |
|---|---|---|---|---|
| 5* | 1.44 | 0.34 | | |
| 6* | 428.2 | 0.48 | 1.53 | Plastic |
| 7* | -3.72 | 0.38 | | |
| 8* | -1.52 | 0.46 | 1.59 | Plastic |
| 9* | -1.37 | 0.11 | | |
| 10* | 3.66 | 0.76 | 1.53 | Plastic |
| 11* | 1.65 | 0.47 | | |
| 12* | -25.8 | 0.41 | 1.53 | Plastic |
| 13 | 0.00 | 0.10 | | |
| 14 | 0.00 | 0.21 | | |
| image | 0.00 | 0.00 | | |

The notation * in the above Table 2 and following Table 3, which is further written near the surface number indicates aspheric. The following Table 3 shows a value of aspheric coefficient of each lens in the exemplary embodiment of Table 2.

Table 3

[Table 3]

| surface number | k | A | B | C | D |
|---|---|---|---|---|---|
| 1* | -0.046365 | 0.493850E-02 | 0.100530E-0 1 | -0.629648E-02 | 0.555614E-02 |
| 2* | 171.687824 | 0.253062E-01 | 0.251815E-0 1 | -0.507260E-01 | -0.161404E-01 |
| 4* | -95.160952 | -0.147016E-0 1 | 0.358856E-0 1 | -0.727036E-01 | -0.177749E-01 |
| 5* | -1.822613 | -0.301941E-0 1 | 0.163257E+0 0 | -0.940848E-01 | -0.181271E-01 |
| 6* | 189974.5266 2 | -0.102619E+0 0 | 0.276371E-0 2 | 0.364519E-01 | -0.568959E-02 |
| 7* | 6.717907 | -0.231095E-0 1 | -0.532779E-0 2 | 0.149978E-01 | 0.117802E-01 |
| 8* | -7.93220 | -0.335589E-0 1 | 0.552756E-0 1 | -0.573232E-01 | 0.389013E-01 |
| 9* | -1.817103 | 0.770871E-01 | -0.537059E-0 1 | 0.297785E-01 | -0.991308E-02 |
| 10* | -44.779031 | -0.102786E+0 0 | 0.248308E-0 1 | -0.231881E-02 | -0.166696E-03 |
| 11* | -10.020834 | -0.784599E-0 1 | 0.1166785E-01 | -0.569009E-02 | 0.919424E-03 |
| 12* | 167.094338 | 0.318912E-03 | 0.318710E-0 3 | 0.109068E-03 | 0.256191E-04 |

**Mode for the Invention**

FIG. 2 is a conceptual view illustrating a camera module according to a first exemplary embodiment of the present invention, and FIG.3 is a conceptual view illustrating a relationship between an infrared filter coated film of a camera module and an image sensor according to a first exemplary embodiment of the present invention.

As noted above, the camera module according to the exemplary embodiment of the present invention capable of performing an auto focusing function may further include a lens barrel (310) mounted with a plurality of lenses, a bobbin coupled to the lens barrel (310) and an actuator (320) including a coil wound on a peripheral surface of the bobbin.

Here, the auto focusing operation of the camera module is performed by operating and moving the actuator (320) to allow the lens barrel (310) and the bobbin to move along an optical axis direction and returned to an original state, where the actuator may be a VCM (Voice Coil Motor).

Furthermore, a last lens (60, a lens adjacent to the image sensor 80) of the imaging lens (100) comprised of a plurality of lenses is formed with the infrared filter coated filter (70), where one surface of the last lens (60) is formed with a lens forming unit, and the other surface of the last lens (60) is formed with the infrared filter coated film (70). The lens forming unit may take a lens shape indicating negative (-) refractive power or positive (+) refractive power.

In a case the other surface of the last lens (60) is formed with a plane surface, the last lens (60) can be evenly formed with the infrared filter coated filter (70).

Furthermore, the camera module according to the first exemplary embodiment of the present invention may be embodied not only by the imaging lens (100) comprised of the first to sixth lenses (110, 120, 130, 140, 150, 160) of FIG. 1, and but by a plurality of lenses applicable to the camera module.

As shown in FIG.3, the infrared filter coated filter (70) is discrete from the image sensor (80) at a predetermined gap (d). That is, the imaging lens (100) is mounted at the lens barrel and moved by operation of the actuator to perform the auto focusing operation, and the infrared filter coated filter (70) formed on the last lens (60) of the imaging lens (100) is also mounted on the lens barrel and moves along with the lenses when the auto focusing operation is performed.

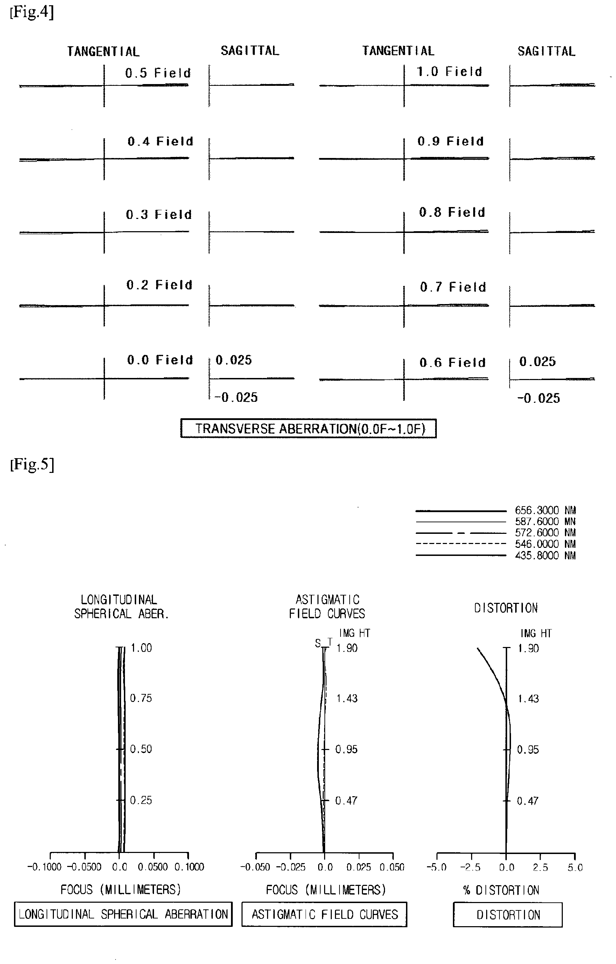

FIG.4, as a graph measuring coma aberration, is a graph illustrating coma aberration according to a first exemplary embodiment of the present invention, where tangential aberration and sagittal aberration of each wavelength based on a field height are measured. In FIG.4, it is interpreted that a coma aberration correcting function is good as curves approach the X axis from a positive axis and a negative axis. In a shown aberration diagram, because values of images in nearly all fields proximate to the X axis, longitudinal spherical aberration, astigmatic field curves and distortion all demonstrate a superior figure.

FIG.5 is a graph illustrating spherical aberration according to a first exemplary embodiment of the present invention. That is, FIG.5 is a graph measuring longitudinal spherical aberration, astigmatic field curves and distortion in order from left side. In FIG.5, a Y axis means size of an image, and an X axis means focal distance (unit: mm) and distortion degree (unit: %). In FIG.5, it is interpreted that an aberration correcting function is good as curves approach the Y axis. In the shown aberration diagram, because values of images in nearly all fields appear proximate to the Y axis, longitudinal spherical aberration, astigmatic field curves and distortion all demonstrate a superior figure.

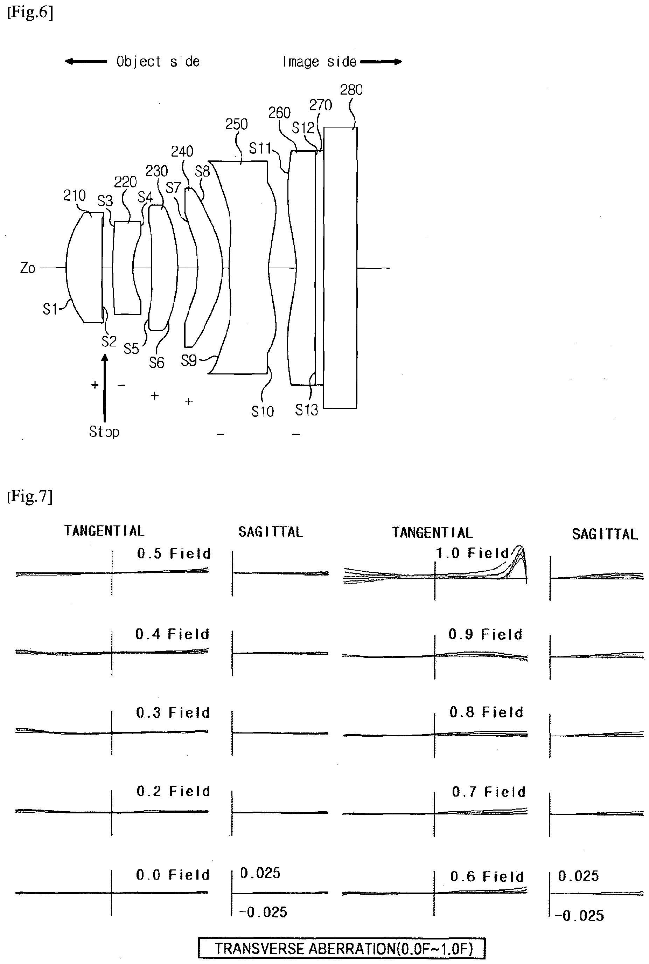

FIG.6 is a constructional view illustrating a camera lens module according to a second exemplary embodiment of the present invention.

The camera module according to a second exemplary embodiment of the present invention includes an imaging lens comprised of a plurality of lenses (first to sixth lens, 210, 220, 230, 240, 250, 260), and an image sensor (280) positioned at a bottom surface of the imaging lens to convert an optical image to an electrical signal, wherein an infrared filter coated film (270) is formed on the sixth lens adjacent to the image sensor (280) among the plurality of lenses (first to sixth lens, 210, 220, 230, 240, 250, 260), and the infrared filter coated film (270) is brought into contact with the image sensor (280).

Furthermore, the camera lens module according to a second exemplary embodiment of the present invention includes an imaging lens comprised of a plurality of lenses (first to sixth lens, 210, 220, 230, 240, 250, 260) that is arranged about an optical axis (ZO), where the first lens (210), the second lens (220), the third lens (230), the fourth lens (240), the fifth lens (250), the sixth lens (260), the infrared filter coated film (270) and the image sensor (280) are arranged in an ordered way from an object side.

The lenses of the imaging lens according to a second exemplary embodiment of the present invention correspond to those of the imaging lens according to the first exemplary embodiment in terms of refractive power, shape and condition. Although the infrared filter coated film (270) coated on the sixth lens (260) is distanced from the image sensor (280) in the imaging lens in the first exemplary embodiment, the infrared filter coated film (270) coated on the sixth lens (260) is brought into contact with the image sensor (280) in the second exemplary embodiment of the present invention.

Thus, the camera lens module according to the second exemplary embodiment of the present invention is also advantageous in that the sixth lens (260) is coated with the infrared filter coated film (270) to dispense with a separate infrared filter, to dispense with an assembly process of attaching a separate infrared filter to a camera part, and to fundamentally block generation of foreign object from the adhesive means, whereby generation of stain on an image photographed by the camera module can be prevented.

Furthermore, the camera lens module according to the second exemplary embodiment of the present invention may be configured with a camera module in which a holder is fixed by the imaging lenses to perform a fixed focusing, for example.

[EXEMPLARY EMBODIMENT]

The following Table 4 shows an exemplary embodiment matching to the conditional expressions of the first exemplary embodiment.

Table 4

[Table 4]

|  | Exemplary embodiment |
|---|---|
| f | 4.18 |
| f1 | 2.56 |
| f2 | -3.65 |
| f3 | 9.58 |
| f4 | 12.58 |
| f5 | -6.24 |
| f6 | -18.54 |
| | f2/f1 | | 1.43 |
| $\Sigma$T | 4.34 |
| $\Sigma$T/f | 1.038 |

Referring to Table 4, it can be known that f1/f is 0.61 that matches the conditional expression 1, and $\Sigma$T/f is 1.038 that matches the conditional expression 2.

An exemplary embodiment of the following Table 5 shows a specific and detailed exemplary embodiment over that of Table 4.

Table 5

[Table 5]

| Surface number | Curvature radius (R) | Thickness or distance (d) | Refractive index (N) | material |
|---|---|---|---|---|
| 1* | 1.46 | 0.546 | 1.54 | Plastic |
| 2* | -29.5 | 1.027 | | |
| (stop) | 0.00 | 0.100 | | |
| 4* | 4.59 | 0.326 | 1.64 | Plastic |
| 5* | 1.50 | 0.294 | | |
| 6* | -19.09 | 0.401 | 1.53 | Plastic |
| 7* | -4.06 | 0.435 | | |
| 8* | -1.55 | 0.360 | 1.59 | Plastic |
| 9* | -1.39 | 0.100 | | |
| 10* | 3.46 | 0.742 | 1.53 | Plastic |
| 11* | 1.57 | 0.550 | | |
| 12* | -9.90 | 0.458 | 1.53 | Plastic |
| 13 | 0.00 | 0.00 | | |
| image | 0.00 | 0.00 | | |

The notation * in the above Table 5 and following Table 6, which is further written near the surface number indicates aspheric. The following Table 6 shows a value of aspheric coefficient of each lens in the exemplary embodiment of Table 5.

Table 6

[Table 6]

| surface number | k | A | B | C | D |
|---|---|---|---|---|---|
| 1* | -0.028064 | 0.568269E-02 | 0.144304E-01 | -0.740142E-02 | 0.325884E-02 |
| 2* | -112.082469 | 0.266599E-01 | 0.358477E-01 | -0.316374E-01 | -0.665728E-03 |
| 4* | -73.853009 | -0.847919E-0 2 | 0.475434E-01 | -0.549314E-01 | -0.150759E-01 |
| 5* | -1.991321 | -0.342131E-0 1 | 0.174331E+00 | -0.698933E-01 | -0.174103E-01 |
| 6* | 15.193511 | -0.873361E-0 1 | -0.760772E-0 2 | 0.306700E-01 | 0.169224E-01 |
| 7* | 8.665072 | -0.351532E-0 1 | -0.282373E-0 2 | 0.151436E-01 | 0.982570E-02 |
| 8* | -7.750039 | -0.362814E-0 1 | 0.540859E-01 | -0.563641E-01 | 0.399197E-01 |
| 9* | -2.150552 | 0.854840E-01 | -0.498271E-0 1 | 0.310134E-01 | -0.949803E-02 |
| 10* | -60.374338 | -0.100857E+0 0 | 0.236087E-01 | -0.243711E-02 | -0.116894E-04 |
| 11* | -0.116894E-0 4 | -0.6985500E-01 | 0.17309701E-01 | -0.5622450E-0 2 | 0.853640E-03 |
| 12* | -127.672661 | 0.158344E-02 | 0.369771E-03 | 0.529956E-04 | 0.681387E-05 |

FIG.7 is a graph measuring a coma aberration according to the first exemplary embodiment of the present invention. In FIG.7, it is interpreted that an aberration correcting function is good as curves approach the X axis from positive axis (+) and negative axis (-). In the shown aberration diagram, because values of images in nearly all fields appear proximate to the X axis, it is interpreted that an aberration correcting function demonstrates a superior figure.

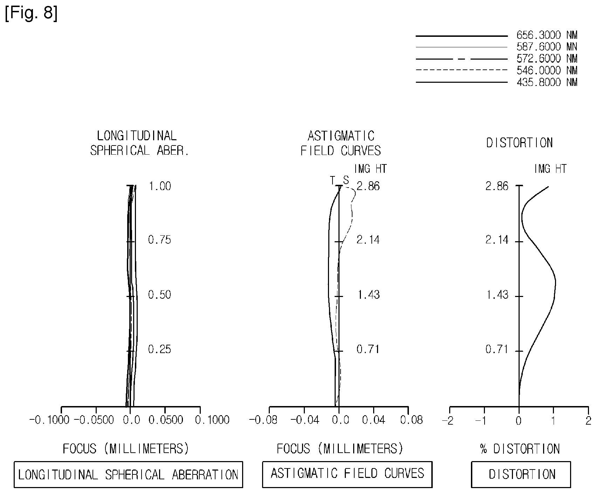

FIG.8 is a graph measuring longitudinal spherical aberration, astigmatic field curves and distortion according to the second exemplary embodiment of the present invention. In FIG.8, a Y axis means size of an image, and an X axis means focal distance (unit: mm) and distortion degree (unit: %). In FIG.8, it is interpreted that an aberration correcting function is good as curves approach the Y axis. In the shown aberration diagram, because values of images in nearly all fields appear proximate to the Y axis, longitudinal spherical aberration, astigmatic field curves and distortion all demonstrate a superior figure.

The previous description of the present invention is provided to enable any person skilled in the art to make or use the invention. Various modifications to the invention will be readily apparent to those skilled in the art, and the generic principles defined herein may be applied to other . Thus, the invention is not intended to limit the examples described herein, but is to be accorded the widest scope consistent with the appended set of claims.

**Industrial Applicability**

As apparent from the foregoing, the imaging lens and camera module according to the exemplary embodiments of the present invention has an industrial applicability in that a camera module lens is dispensed with an assembly process of adhering a separate infrared filter to a camera part using adhesive means, and generation of foreign object from the adhesive means is fundamentally interrupted during operation of the camera module, whereby generation of stain on an image photographed by the camera module is prevented.

**Claims**

1. An imaging lens (100), comprising in an ordered way from an object side:

a first lens (110, 210) having positive (+) refractive power;
a second lens (120, 220) having negative (-) refractive power;
a third lens (130, 230) having positive (+) refractive power;
a fourth lens (140, 240) having positive (+) refractive power;
a fifth lens (150, 250) having negative (-) refractive power and which is formed in a meniscus shape having a convex surface on an object side;

and a sixth lens (160, 260) having negative (-) refractive power and having a concave surface on the object side, wherein the sixth lens is formed with an infrared filter coated film (170, 270), wherein both an object side surface and an image side surface of the fifth lens (150, 250) have positive curvature at an optical axis of the imaging lens (100), wherein an object side surface of the sixth lens (160, 260) has negative curvature at the optical axis of the imaging lens (100), and wherein an object side surface of the second lens (120, 220) has positive curvature at the optical axis of the imaging lens (100), wherein a separate aperture stop is interposed between the first lens (110, 210) and the second lens (120, 220).

2. The imaging lens (100) of claim 1, wherein one surface of the sixth lens (160, 260) is formed with a lens forming unit, and the other surface of the sixth lens (160, 260) is formed with the infrared filter coated film (170, 270).

3. The imaging lens (100) of claim 1, wherein the other surface of the sixth lens (160, 260) is a plane surface, and the imaging lens satisfies a condition of 50 <V3,V4,V5<60, where V3, V4 and V5 are Abbe's numbers of third (130, 230), fourth (140, 240) and fifth lens (150, 250), respectively.

4. A camera module, the camera module comprising:

the imaging lens (100) according to claim 1;
and an image sensor (80) positioned at a bottom surface of the imaging lens (100) to convert an optical image to an electrical signal.

5. The camera module of claim 4, further comprising: a lens barrel (310) mounted with the imaging lens (100); a bobbin coupled to the lens barrel (310); and an actuator (320) including a coil wound on a peripheral surface of the bobbin.

6. The camera module of claim 5, wherein the infrared filter coated film (170, 270) is distanced from the image sensor (80) at a predetermined space.

7. The camera module of claim 5, wherein the infrared filter coated film (170, 270) is mounted on the lens barrel (310) to move along with the imaging lens (100) when an auto focusing operation is performed.

8. The camera module of claim 4, wherein a lens adjacent to the image sensor (80) is formed at one surface with a lens forming unit, and the other surface of the lens is formed with the infrared filter coated film (170, 270).

9. The camera module of claim 8, wherein the other surface of the lens adjacent to the image sensor (80) is a plane surface.

10. The camera module of claim 4, wherein the infrared filter coated film (170, 270) is brought into contact with the image sensor (80).

**Patentansprüche**

1. Abbildungslinse (100), die auf eine geordnete Weise von einer Objektseite aus Folgendes umfasst:

eine erste Linse (110, 210), die eine positive (+) Brechkraft aufweist;
eine zweite Linse (120, 220), die eine negative (-) Brechkraft aufweist;
eine dritte Linse (130, 230), die eine positive (+) Brechkraft aufweist;
eine vierte Linse (140, 240), die eine positive (+) Brechkraft aufweist;
eine fünfte Linse (150, 250), die eine negative (-) Brechkraft aufweist und die in einer Meniskusform ausgebildet ist, die eine konvexe Oberfläche auf einer Objektseite aufweist;
und eine sechste Linse (160, 260), die eine negative (-) Brechkraft aufweist und eine konkave Oberfläche auf der Objektseite aufweist, wobei die sechste Linse mit einem mit Infrarotfilter beschichteten Film (170, 270) ausgebildet ist,
wobei sowohl eine Objektseitenoberfläche als auch eine Bildseitenoberfläche der fünften Linse (150, 250) eine positive Krümmung an einer optischen Achse der Abbildungslinse (100) aufweisen, wobei eine Objektseitenoberfläche der sechsten Linse (160, 260) eine negative Krümmung an der optischen Achse der Abbildungslinse (100) aufweist, und wobei eine Objektseitenoberfläche der zweiten Linse (120, 220) eine positive Krümmung an der optischen Achse der Abbildungslinse (100) aufweist, wobei eine separate Aperturblende zwischen der

11

ersten Linse (110, 210) und der zweiten Linse (120, 220) eingefügt ist.

2.  Abbildungslinse (100) nach Anspruch 1, wobei eine Oberfläche der sechsten Linse (160, 260) mit einer Linsenausbildungseinheit ausgebildet ist und die andere Oberfläche der sechsten Linse (160, 260) mit dem mit Infrarotfilter beschichteten Film (170, 270) ausgebildet ist.

3.  Abbildungslinse (100) nach Anspruch 1, wobei die andere Oberfläche der sechsten Linse (160, 260) eine ebene Oberfläche ist und die Abbildungslinse eine Bedingung von 50 <V3, V4, V5<60 erfüllt, wobei V3, V4 und V5 die Abbe-Zahlen der dritten (130, 230), vierten (140, 240) beziehungsweise fünften Linse (150, 250) sind.

4.  Kameramodul, wobei das Kameramodul Folgendes umfasst:

    die Abbildungslinse (100) nach Anspruch 1;
    und einen Bildsensor (80), der an einer unteren Oberfläche der Abbildungslinse (100) angeordnet ist, um ein optisches Bild in ein elektrisches Signal umzuwandeln.

5.  Kameramodul nach Anspruch 4, das ferner Folgendes umfasst:

    einen Objektivtubus (310), der mit der Abbildungslinse (100) gelagert ist; einen Spulenkörper, der mit dem Objektivtubus (310) gekoppelt ist; und einen Stellantrieb (320), der eine Spule einschließt, die auf einer Umfangsoberfläche des Spulenkörpers gewickelt ist.

6.  Kameramodul nach Anspruch 5, wobei der mit Infrarotfilter beschichtete Film (170, 270) von dem Bildsensor (80) um einen vorgegebenen Raum beabstandet ist.

7.  Kameramodul nach Anspruch 5, wobei der mit Infrarotfilter beschichtete Film (170, 270) auf dem Objektivtubus (310) gelagert ist, um sich mitsamt der Abbildungslinse (100) zu bewegen, wenn ein Autofokusbetrieb durchgeführt wird.

8.  Kameramodul nach Anspruch 4, wobei eine an den Bildsensor (80) angrenzende Linse an einer Oberfläche mit einer Linsenausbildungseinheit ausgebildet ist und die andere Oberfläche der Linse mit dem mit Infrarotfilter beschichteten Film (170, 270) ausgebildet ist.

9.  Kameramodul nach Anspruch 8, wobei die andere Oberfläche der an den Bildsensor (80) angrenzenden Linse eine ebene Oberfläche ist.

10. Kameramodul nach Anspruch 4, wobei der mit Infrarotfilter beschichtete Film (170, 270) mit dem Bildsensor (80) in Berührung gebracht wird.

**Revendications**

1.  Lentille d'imagerie (100), comprenant de manière ordonnée à partir d'un côté objet :

    une première lentille (110, 210) ayant un puissance de réfraction positive (+) ;
    une deuxième lentille (120, 220) ayant un puissance de réfraction négative (-) ;
    une troisième lentille (130, 230) ayant un puissance de réfraction positive (+) ;
    une quatrième lentille (140, 240) ayant un puissance de réfraction positive (+) ;
    une cinquième lentille (150, 250) ayant une puissance de réfraction négative (-) et qui est formée en une forme de ménisque ayant une surface convexe sur un côté objet ;
    et une sixième lentille (160, 260) ayant une puissance de réfraction négative (-) et ayant une surface concave sur le côté objet, dans lequel la sixième lentille est formée avec un film revêtu d'un filtre infrarouge (170, 270), dans laquelle une surface côté objet et une surface côté image de la cinquième lentille (150, 250) ont une courbure positive au niveau d'un axe optique de la lentille d'imagerie (100), dans laquelle une surface côté objet de la sixième lentille (160, 260) a une courbure négative au niveau de l'axe optique de la lentille d'imagerie (100), et dans laquelle une surface côté objet de la deuxième lentille (120, 220) a une courbure positive au niveau de l'axe optique de la lentille d'imagerie (100), dans laquelle un diaphragme d'ouverture séparé est interposé entre la première lentille (110, 210) et la deuxième lentille (120, 220).

**2.** Lentille d'imagerie (100) selon la revendication 1, dans laquelle une surface de la sixième lentille (160, 260) est formée avec une unité de formation de lentille, et l'autre surface de la sixième lentille (160, 260) est formée avec le film revêtu de filtre infrarouge (170, 270).

**3.** Lentille d'imagerie (100) selon la revendication 1, dans laquelle l'autre surface de la sixième lentille (160, 260) est une surface plane, et la lentille d'imagerie satisfait à une condition de 50 <V3, V4, V5<60, où V3, V4 et V5 sont des nombres d'Abbe des troisième (130, 230), quatrième (140, 240) et cinquième lentilles (150, 250), respectivement.

**4.** Module de caméra, le module de caméra comprenant :

la lentille d'imagerie (100) selon la revendication 1 ;
et un capteur d'image (80) positionné au niveau d'une surface inférieure de la lentille d'imagerie (100) pour convertir une image optique en un signal électrique.

**5.** Module de caméra selon la revendication 4, comprenant en outre : un barillet de lentille (310) monté avec la lentille d'imagerie (100) ; une bobine couplée au barillet de lentille (310) ; et un actionneur (320) comprenant une bobine enroulée sur une surface périphérique de la bobine.

**6.** Module de caméra selon la revendication 5, dans lequel le film revêtu d'un filtre infrarouge (170, 270) est éloigné du capteur d'image (80) selon un espace prédéterminé.

**7.** Module de caméra selon la revendication 5, dans lequel le film revêtu d'un filtre infrarouge (170, 270) est monté sur le barillet de lentille (310) pour se déplacer avec la lentille d'imagerie (100) lorsqu'une opération de mise au point automatique est effectuée.

**8.** Module de caméra selon la revendication 4, dans lequel une lentille adjacente au capteur d'image (80) est formée sur une surface avec une unité de formation de lentille, et l'autre surface de la lentille est formée avec le film revêtu de filtre infrarouge (170, 270).

**9.** Module de caméra selon la revendication 8, dans lequel l'autre surface de la lentille adjacente au capteur d'image (80) est une surface plane.

**10.** Module de caméra selon la revendication 4, dans lequel le film revêtu d'un filtre infrarouge (170, 270) est mis en contact avec le capteur d'image (80).

[Fig. 1]

◄— Object side        Image side —►

[Fig. 2]

LENS BARREL

ACTUATOR

PLURALITY OF LENSES

ACTUATOR

PLURALITY OF LENSES

[Fig. 3]

[Fig.4]

| TANGENTIAL | SAGITTAL | TANGENTIAL | SAGITTAL |
|---|---|---|---|
| 0.5 Field | | 1.0 Field | |
| 0.4 Field | | 0.9 Field | |
| 0.3 Field | | 0.8 Field | |
| 0.2 Field | | 0.7 Field | |
| 0.0 Field | 0.025 / -0.025 | 0.6 Field | 0.025 / -0.025 |

TRANSVERSE ABERRATION(0.0F~1.0F)

[Fig.5]

656.3000 NM
587.6000 MN
572.6000 NM
546.0000 NM
435.8000 NM

LONGITUDINAL
SPHERICAL ABER.

1.00
0.75
0.50
0.25

-0.1000 -0.0500 0.0 0.0500 0.1000
FOCUS (MILLIMETERS)

LONGITUDINAL SPHERICAL ABERRATION

ASTIGMATIC
FIELD CURVES

IMG HT
S T 1.90
1.43
0.95
0.47

-0.050 -0.025 0.0 0.025 0.050
FOCUS (MILLIMETERS)

ASTIGMATIC FIELD CURVES

DISTORTION

IMG HT
1.90
1.43
0.95
0.47

-5.0 -2.5 0.0 2.5 5.0
% DISTORTION

DISTORTION

[Fig.6]

[Fig.7]

TRANSVERSE ABERRATION(0.0F~1.0F)

[Fig. 8]

656.3000 NM
587.6000 NM
572.6000 NM
546.0000 NM
435.8000 NM

LONGITUDINAL
SPHERICAL ABER.

ASTIGMATIC
FIELD CURVES

DISTORTION

IMG HT

IMG HT

1.00

T S 2.86

2.86

0.75

2.14

2.14

0.50

1.43

1.43

0.25

0.71

0.71

-0.1000 -0.0500 0.0 0.0500 0.1000

-0.08 -0.04 0.0 0.04 0.08

-2 -1 0 1 2

FOCUS (MILLIMETERS)

FOCUS (MILLIMETERS)

% DISTORTION

LONGITUDINAL SPHERICAL ABERRATION

ASTIGMATIC FIELD CURVES

DISTORTION

**EP 2 718 761 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100040357 A